(19) Europäisches Patentamt
European Patent Office
Office européen des brevets

(11) Publication number: **0 196 164 A2**

(12) # EUROPEAN PATENT APPLICATION

(21) Application number: **86301199.5**

(22) Date of filing: **20.02.86**

(51) Int. Cl.⁴: **C 09 D 11/02**, B 41 M 5/26, G 09 F 3/02

(30) Priority: **22.02.85 US 704626**
**05.02.86 US 824867**

(43) Date of publication of application: **01.10.86**
**Bulletin 86/40**

(84) Designated Contracting States: **AT BE CH DE FR GB IT LI LU NL SE**

(71) Applicant: **GRAPHIC CONTROLS CORPORATION, 189 Van Renssalaer Street, Buffalo New York 14210 (US)**

(72) Inventor: **Katsen, Boris, 55 South Wind Trail, Williamsville New York 14221 (US)**
Inventor: **Duke, Robert, 95 Ludington Street, Buffalo New York 14206 (US)**
Inventor: **Brinkworth, Robert T., 6744 Southwestern Boulevard, Lakeview New York 14085 (US)**

(74) Representative: **Shipley, Warwick Grenville Michael et al, VENNER, SHIPLEY & CO. 368 City Road, London EC1V 2QA (GB)**

(54) **Self-protecting thermally developable printing composition and print stock.**

(57) The present invention provides a thermally-developable printing and self-protecting coating composition comprising an aqueous dispersion of

a. a chromatic material,

b. a water-stable phenol-amine complex having limited water solubility, and

c. an alkaline, water-soluble binder in ammonium or amine salt form,

characterized in that it contains a polyfunctional aziridinyl compound in an aziridinyl compound/binder meq/gram ratio of 3.26/3.62 to 7.14/3.62.

The present invention also provides a print stock and a labeling material comprising this composition.

EP 0 196 164 A2

## SELF-PROTECTING THERMALLY DEVELOPABLE PRINTING COMPOSITION AND PRINT STOCK

This invention relates to thermally-developable printing inks which also function as protective coatings for recording papers and films, particularly for labels used on food packages in supermarkets, meat plants and similar environments.

Thermally-developable printing and coating compositions are known which resist premature color development, particularly when the paper or film coated with the composition is exposed to high humidity. Such compositions are described in U.S. Patent 4,500,354 to Katsen et al and are also characterized by ability to generate sharply defined, high-contrast indicia of enhanced clarity and permanence while avoiding or minimizing abrasion of and residue on the printhead after repeated printing. The printing and coating compositions of the patent contain a water-stable, phenol-amine complex which is largely responsible for the improvements afforded by the compositions.

In addition to the foregoing properties of stability and controlled color development and reduced printhead abrasion and contaminaton, thermally-developable print stock should also be resistant to conditions commonly encountered in meat packing plants, food distribution centers and retail merchandising operations such as supermarkets. For example, thermal labels carrying thermally-developed trace indicia when applied to plastic film wrappings for food products must be resistant to water, alcoholic substances, vinegar and fats from the food product itself or from neighboring packages or the storage environment. Poor resistance may cause obscuring of the label indicia and lowered contrast between the label background and the thermal images, and may lead to interference with laser scannability of bar codes which may be imprinted on the label. Similar consequences ensue upon migration of plasticizers from plastic wraps, migration of the pressure-sensitive adhesive commonly employed on the labels, and migration of acidic substances in the paper. Such migration is often promoted by the stacking of food packages on one another, and contributes substantially to obscuring of the trace indicia on the label and to other degradation which interferes with visual or electronic reading.

Complex systems have been devised to protect thermal labels against the aforementioned deleterious influences. In one such system, the paper base of the label has a protective layer on its front (top) side as a barrier against migration of acidic substances from the paper, a thermally developable coating over the protective layer and a transparent overlayer. In addition, the back (under) side of the paper has a protective layer in contact with the paper, a pressure-sensitive adhesive over the protective layer, and a release liner in contact with the pressure sensitive adhesive. The protective layer on the back side operates as a barrier against migration of the adhesive onto the paper. The protective layers are intended not only to prevent substances within and on the label from migrating within the composite label but also to keep the thermal coating intact, both before and after developing, when aggressive substances such as water, alcohol, vinegar and fats may

contact the label. Multi-layered systems of the foregoing types are described in U.S. patents 4,388,362, 4,401,721 and 4,444,819.

It will be apparent that production of such labels requires multi-coating processes and equipment. Furthermore, each layer or coating must be dried before another is applied. These requirements make it difficult to produce a high quality label at reasonable cost.

It has now been found that thermally developable print stock can be produced in a single-pass coating operation which not only exhibits the controlled color development, high-contrast print capability and permanence of the recording papers of U.S. Patent 4,500,354 but also provides outstanding resistance to migration of substances within the print stock and substances in packaged food environments, such as moisture, alcoholic compositions, vinegar, fats, and printing inks or resinous substances from labels of other packages in contact with print stock of the invention.

In one aspect of the invention, a thermally-developable printing ink and self-protecting coating composition is provided. This composition contains a

chromogenic compound, a water-stable phenol-amine complex having limited water-solubility, an alkaline, water-soluble binder, and a polyfunctional aziridinyl crosslinking agent for the binder.

In another aspect, the invention includes a thermally-developable, environmentally protected print stock comprising a paper or polymeric film substrate coated with a mixture of a chromogenic compound, a water-stable phenol-amine complex, and a binder crosslinked with a polyfunctional aziridinyl compound.

In still another aspect, the invention comprises an essentially single-pass coating process for producing the aforementioned thermally-developable, environmentally protected print stock, wherein a paper or a polymeric film substrate is coated with an aqueous dispersion of a chromogenic compound, a water-stable phenol-amine complex having limited water solubility, an alkaline, water-soluble binder, and a polyfunctional aziridinyl crosslinking agent for the binder, and the thus-coated substrate is then dried.

These and other aspects, features and advantages of the invention are further described and exemplified in the description which follows.

The chromogenic materials used in the printing and self-protecting coating compositions of the invention are any of the color-producing materials which remain in the leuco or colorless form until reaction with a phenolic material under the influence of heat. A great variety of such chromogenic materials are known including the phthalide, naphthalide, fluoran and spiropyran compounds described in U.S. patents 4,500,354 and 4,097,288 and in the patents and other publications listed therein. All of such patents and publications are incorporated herein by reference.

Typical of such chromogenic materials and preferred for use in the present invention are the following fluorans:

3-N-cyclohexyl-N-butyl-6-methyl-7-anilino/fluoran

3-N-dibutylamino-7-chloranilino/fluoran
3-N-dibutylamino-7-fluoranilino/fluoran
3-N-dibutylamino-6-methyl-7-anilino/fluoran
3-N-cyclohexyl-N-methyl-6-methyl-7-anilino/fluoran
3-N-cyclomethyl-6-methyl-7-anilino/fluoran

The foregoing fluorans provide black images. If blue images are desired, for scanning by red laser, Crystal Violet Lactone or similar blue dye may be used.

The amount of chromogenic material is noncritical and generally is used in an amount of from about 1% to about 10% by weight of the total aqueous dispersion to be applied to the print stock, or in any other amount which will provide clarity and contrast. A preferred amount is about 3-6 wt.% on the same basis.

The phenolic component required for generation of color from the chromogenic material during thermal printing is present in the printing ink as a phenol-amine complex. This complex is a crystalline polymeric material formed by reaction between a polyhydroxy phenol and an amine having a low boiling point, including both monoamines and polyamines. The phenols are those capable of forming complexes with amines in aqueous media and include such compounds as sulfonyl diphenol, thio diphenol, 4,4'-dihydroxy sulfonyl diphenol, 2,2'-hydroxy sulfonyl diphenol, 4,4'-dihydroxy diphenylol propane, paraphenyl phenol, and the like, including any mixtures thereof.

The amines typically are aliphatic primary or secondary monoamines, including any mixtures

thereof, wherein the aliphatic group is alkyl or lower cycloalkyl ("lower" meaning from 1 to 6 carbon atoms). Typical of such amines are n-butyl amine, n-propyl amine, cyclohexyl amine, ethylene diamine, diisopropyl amine and the like. The phenol and amine are reacted in proportions such that the resulting complex contains a ratio of hydroxyl groups to amino groups of greater than 1:1, preferably about 2:1, e.g., about 1.9:1 to about 2.05:1.

Representative phenol-amine complexes are those of the following formula:

$$(HO-\phi-SO_2-\phi-OH)_n \cdot (R-NH_2)_{n+1}$$

where $\phi$ is a phenylene group, substituted or unsubstituted, n is more than 1, e.g., 2 to about 30, preferably 5-20, and R is an alkyl or cycloalkyl group such as n-butyl or cyclohexyl. Phenol-amine complexes such as the foregoing are further described in U.S. Patent 4,500,354, incorporated herein by reference.

The phenol-amine complexes are added to the aqueous dispersions in amounts effective to provide at least one equivalent per equivalent of chromogenic compound. Preferably, however, an excess of the phenol-amine complex is present in order to assist in stabilization of the chromogenic compound and the color resulting from thermal printing. Preferred

aqueous dispersions therefor will contain a mole ratio of phenol-amine complex to chromogenic material of greater than 1:1, for example 1.5:1, preferably 2:1.

The third essential component of the printing and coating compositions is an alkaline, water-soluble binder which assists in stabilizing the printing ink dispersion and binding the ingredients to the print stock. However, although the alkaline, water-soluble nature of the binder enables it to be dispersed in the aqueous printing composition and to form a solid film on the print stock after drying, it has been found that the durability envisioned by the invention requires that the binder be crosslinked with a polyfunctional aziridinyl compound as described below. Otherwise, the print composition will smear or dissolve when contacted by moisture due to removal of the binder.

Useful binder materials include both natural substances such as casein and synthetic polymers such as styrene-maleic anhydride copolymers, acrylic acid copolymers, styrene-butadiene copolymers, styrene-acrylic copolymers, polyacrylamides, vinyl-acrylic copolymers and polyesters, all having functionality which is reactive with polyfunctional aziridines and thus being capable of crosslinking thereby. Typically, the crosslinkable functionality in the binder is carboxylic although some hydroxyl functionality may also serve as a basis for crosslinking. Preferred binders are casein and styrene-maleic anhydride copolymers wherein the styrene:maleic anhydride mole ratio is from about 1:1 to about 3:1. The carboxylic functionality of the foregoing binders may also be partially esterified.

The binders are rendered alkaline and water-soluble by reaction with an alkali such as an amine, e.g., diethylamine, or ammonium hydroxide. Preferably, the binders are ammoniated to form ammonium salts. Upon drying of the aqueous printing ink dispersions on the print stock, the ammonia or amine is volatilized and the binder is crosslinked by the aziridine compound.

The binders are utilized in the aqueous dispersions in amounts of from about 3 to 10 wt.%, based on total dispersion weight, preferably about 4.5 to about 6.5 wt%. Heavier stock such as cardboard will require higher concentrations of the binder.

The polyfunctional aziridinyl crosslinking agents (also known as "polyaziridinyl" compounds) are commercially available, water dispersible materials, such as the compounds disclosed in U.S. Patents 4,225,665 and 4,418,164, having the formula:

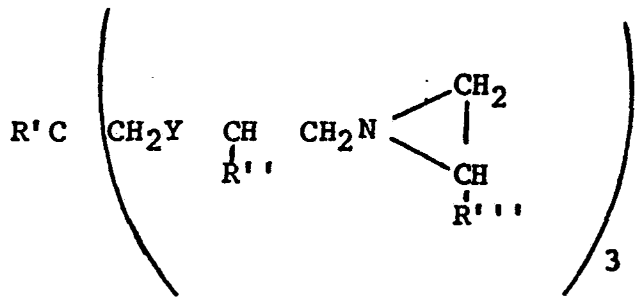

where Y is $-O\overset{O}{\overset{\|}{C}}-$, R' is alkyl or hydroxyalkyl of from 1 to 4 carbon atoms, and R'' and R''' independently are hydrogen or methyl. Typical compounds are the following:

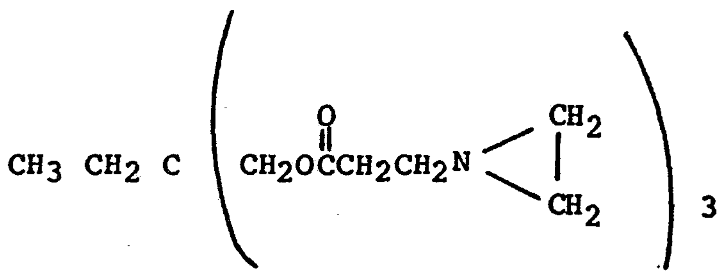

trimethylolpropane-tris- [B-(N-aziridinyl) propionate]

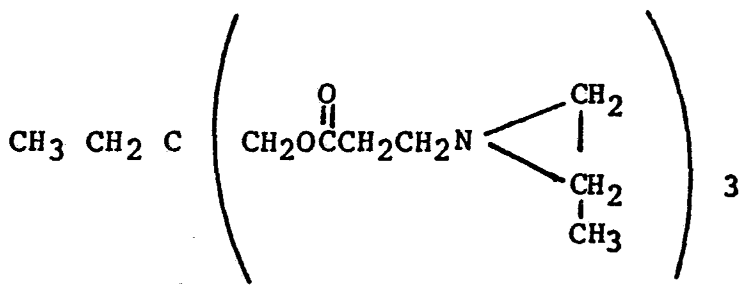

trimethylolpropane-tris-[B-(N-2-methyl aziridinyl) propionate]

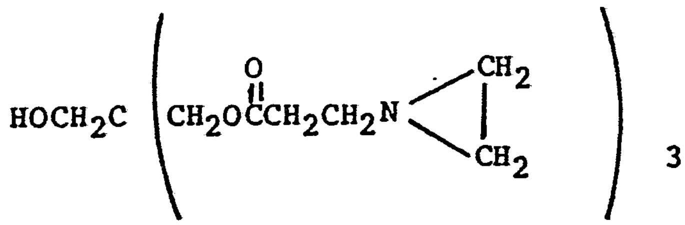

pentaerythritol-tris-[B-(N-aziridinyl) propionate]

Other polyfunctional aziridinyl compounds may also be used provided they contain at least two groups which are crosslinkable with the binder, e.g., two aziridinyl groups rather than the three aziridinyl groups of the above-listed compounds. The trifunctional compounds are commercially available under the designations "XAMA-2" or "XAMA-7" (Cordova Chemical Company of Michigan) and "CX-100" (Polyvinyl Chemical Industries).

The polyfunctional aziridinyl compounds are used in amounts effective for crosslinking of the binder and for this reason will be present in the inks in an aziridinyl compound/binder meq/gram ratio of about 3.26/3.62 to 7.14/3.62. The use of ratios lower than about 3.26/3.62 results in contamination of printing heads by binder and other residues. The use of ratios of 7.14/3.62 or higher results in images showing a significant loss of optical density. Preferably, the ratio is about 3.4/3.62 to 3.75/3.62 and most preferably about 3.62/3.62. Generally, for the preferred aziridinyl compounds listed above, an amount of from

about 3 to about 10 wt.% based on total weight of the aqueous dispersion will be useful, for a dispersion containing a binder in the same range.

Optionally, other ingredients may be added to the aqueous dispersion for enhancement of certain properties. For example, fatty acid amides are commonly added to such dispersions for melting point modification of the dried printing ink compositions. Typical fatty acid amides include behenic acid amide, arachidic acid amide, bis-stearamide and any mixtures thereof. Other useful additives include fillers such as alkali or alkaline earth metal salts of fatty acids, solvents for the chromogenic compounds and phenolic developers such as $C_{14}$-$C_{21}$ aliphatic ketones, surfactants to assist in dispersion, optical brighteners, compounds for pH control, and potassium salts of polyester resins (such as "Alresat K-140," American Hoechst) to assist in preventing migration of acidic substances from the print stock to the printing composition.

The aqueous print dispersions are conveniently prepared by first dispersing the binder in an aqueous medium, adding ammonium hydroxide to solubilize the binder, and then milling the resinous dispersion with the phenol-amine complex, chromogenic compound, crosslinking agent and optional additives such as a fatty acid amide, potassium carbonate and

aluminum hydroxide for pH control, dispersing aids such as a surfactant compatible with the other components of the dispersion, and a silicone-type defoaming agent. If the coating composition is to remain in storage for any extended period of time, it may be advisable to add the aziridinyl crosslinking agent at time of use, to avoid premature crosslinking. The print stock is coated with the aqueous dispersion in any suitable manner, such as by blade coating, direct metering reverse-rolling, Mayer rod coating, reverse gravure coating or air-knife coating.

Suitable print stock includes paper of various types (machine-glazed, machine-finished paper or cardboard) and polymeric films which are receptive to thermal printing inks. Typical of the latter are films having softening points of at least 200°C such as polycarbonate and certain polyester, polyamide, polystyrene and cellulose acetate-butyrate copolymers.

Following application of the printing ink dispersion, the coated substrate is air or oven-dried, whereupon the binder material is crosslinked and forms, with the chromogenic components and phenol-amine complex, a highly protective and thermally-developable coating.

In one mode of use, the print stock of the invention is coated with a pressure sensitive adhesive to which a release paper is applied. The resulting recording paper or film is then ready for thermal printing in the production of labels for application to packaging film or paper in meat packing and other merchandizing operations. In another application, the print stock may be thermally printed initially and then affixed with a suitable adhesive directly to packaging film or paper. In still other applications, the print stock before or after printing may be laminated to a backing material, which may contain a magnetic material, for stiffening or further protection, or after printing may be laminated to transparent facing and/or backing sheets for the production of credit cards, access control cards, magnetic tickets and the like. Numerous other uses of the print stock will be apparent to those skilled in the art without departing from the spirit and scope of the invention.

The following examples will further illustrate the invention but are not intended to necessarily limit the scope thereof. In the examples and throughout the specification and claims, all parts and percentages are by weight unless otherwise stated.

## EXAMPLE 1

An aqueous printing ink and coating composition was prepared from the following formulation:

| | Parts by Wt. |
|---|---|
| Phenol-amine complex[1] | 1.2 |
| Behenic acid amide[2] | 1.0 |
| Styrene-maleic anhydride copolymer, ammonium salt[3] | 0.4 |
| 3-n-cyclohexyl-n-butyl-6-methyl-7-anilino fluoran[4] | 0.2 |
| Polyaziridine crosslinker[5] | 0.4 |
| Optical Whitener[6] | 0.2 |
| Water | 5.6 |

---

(1) Crystalline material prepared by reaction of dihydroxydiphenyl sulfone and n-butylamine in a 2:1 mole ratio.

(2) Kemamide B: Witco Chemical Corporation, Humko Chemical Division.

(3) Scripset 540 resin: Monsanto Company (isopropyl half ester)

(4) Shin-Hisso Kako

(5) XAMA-2: Trimethylolpropane-tris-(B-(N-aziridinyl) propionate), Cordova Chemical Company of Michigan.

(6) Arctic White: Milton-Davis Company

The composition was prepared in a reactor equipped with an ultra-fast agitator by forming the phenol-amine complex in the water and then adding a minor amount of silicone defoamer, the styrene-maleic anhydride resin and ammonium hydroxide. While continuing the agitation the behenic acid amide is added and the mixture is allowed to cool to 65°C. Thereupon, the fluoran dye is added and the mixture is sand-milled for about 0.5 hour to a finely-ground dispersion of 4-6 micrometer average particle size. The mixture is then filtered and the aziridine crosslinking agent added.

Scale label face stock was prepared by blade-coating the foregoing composition onto the smooth (felt) side of machine-glazed or machine-finished paper at an application rate of 7-8 g/$m^2$ and oven-drying the coated stock at a temperature profile of about 200 to 65°C for about 8 to 10 seconds. The coated paper was then tested, along with samples of commercially available thermal papers and labels prepared in accordance with U.S. Patent 4,500,354, for resistance to various substances commonly encountered

in supermarkets and meat packing operations. The formulation of U.S. Patent 4,500,354 used for comparison was as follows, wherein the ingredients are the same as for the above formulation except as noted:

| | Parts By Weight |
|---|---|
| Phenol-amine complex | 323 |
| Behenic acid amide | 250 |
| Styrene-maleic anhydride copolymer, sodium salt[1] | 130 |
| 3-n-cyclohedyl-n-butyl-6-methyl-7-anilino fluoran | 55 |
| Polyester resin, potassium salt[2] | 35 |
| Defoamer[3] | 14-20 |
| Water | 1400 |

---

[1] Scripset 501 resin - Monsanto Company
[2] Alresat K-140 - American Hoechst
[3] Silicone

Test Procedures And Results

(a) Resistance to water

Pressure-sensitive acrylic adhesive was applied to samples of the coated paper and the samples

were thermally printed on a Hobart VIS-VP bar code printer. The optical density (O.D.) of the label samples were measured. The samples were then immersed in water for 24 hours, air-dried and optical measurements again taken to determine the effect of the water on the print quality. Since an O.D. = 0 indicates perfectly black print quality, lower O.D. values (reflectance) indicate better print quality. Scannability of the bar codes by Lasercheck was also determined. Results are given in Table I.

(b) Resistance to migration of pressure-sensitive adhesive

Background optical density measurements were made on coated paper samples of the invention immediately after application of pressure-sensitive adhesive and after six months in storage. These results were compared with optical density measurements on samples from other sources similar to the water resistance test. The data is set forth in Table II.

(c) Resistance to vegetable fat and oil

The background and image optical densities of label samples prepared as in the water resistance test were measured and separate samples were then smeared with vegetable oil and fat. After 24 hours storage of the samples optical densities were again

measured. Table III gives the results.

(d) Resistance to migration of plasticizers

Label samples were prepared and thermally printed with bar codes ("bars") as in the water resistance test. Optical densities (% reflectances) were then measured and the samples adhered to plasticized polyvinyl chloride (PVC) wrapping film. After 72 hours of contact optical densities were again determined. The measurements were expressed as percent contrast signal (PCS), calculated as follows where $R_1$ is reflectance of background and $R_2$ is reflectance of the bars:

$$PCS = \frac{R_1 - R_2}{R_1} \times 100$$

The results (Table IV) give the percent contrast between the background and imaged characters retained by the samples.

(e) Resistance to vinegar

Label samples were prepared as in the water resistance test and tested in the same manner except for substitution of vinegar for water. Table V gives the results.

-21-

TABLE I
Resistance to Water (tap)

| Product | Initial O.D. at 1.3 w/dot and expressed as % bar code replication | Final O.D. after test | % scannability by Lasercheck |
|---|---|---|---|
| Scale Label face stock of the present invention | 15-20 | 26-31 | 100% |
| Label stock of U.S. patent 4,500,354 | 18-22 | no image | 0% |
| [1]Ricoh LAV 115 label stock | 7-18 | 22-28 | 95-100% |
| Pitney Bowes facsimile grade thermal paper | 7-10 | 40-45 | less than 70% |

[1]A multiple layer stock having on the back side of the paper a pressure-sensitive adhesive and then a protective coating, and the front side of the paper another protective layer, a thermally-developed print coat and a third, protective overcoat.

It is evident from Table I that the crosslinking agent in the printing ink/coating composition of the invention prevented washing out of the image. As compared with the commercial products, the label stock of the invention exhibited an approximately equivalent initial optical density which about doubled after submersion as compared with approximate tripling in the case of the Ricoh multi-layered product and more than quadrupling in the case of the Pitney Bowes product. Laser scannability remained at 100% as compared with 0% for the prior product and less than 100% for the commercial products. The system of the invention therefore provided excellent protection against moisture with but a single coat.

TABLE II

Resistance to migration of pressure-sensitive adhesive

| | Background O.D. upon application of adhesive | Background O.D. after 6 months in storage |
|---|---|---|
| Scale label face stock of the invention | 0.05 | 0.09 max |
| [1]Label stock of U.S. Patent 4,500,354 | 0.05 | 0.09 max |
| Ricoh LAV 115 label stock | not available | over 0.14 |
| [2]Pitney Bowes facsimile grade thermal paper | 0.07 | over 0.14 |

[1]See footnote (1) of Table I.

[2]Same as used in water resistance test but an acrylic pressure sensitive adhesive was applied from a release liner.

The difference in optical density from 0.05 to 0.09 in Table II is not visually noticeable and the decline from 0.07 to over 0.14 is marginally noticeable as a gray color. However, the substantial prevention of adhesive migration for products of the invention was achieved with a single coating as compared with multiple coats in the Ricoh product.

TABLE III

| | Resistance to vegetable oil and fat: Oil | Fat |
|---|---|---|
| Scale label face stock of the invention | No change of the image density or background | No change of the image density or background |
| Ricoh LAV 115 scale label stock | Slight change of image density | Significant change of image density and background |
| [1]Ricoh HR stock | Slight change of image density but spot-like disappearance of the image | Slight change of image density but spot-like disappearance of the image |

[1]A multi-layered thermal paper similar to Ricoh LAV 115.

The results in Table III show the superiority of labels of the invention, particularly in view of their single coating character as contrasted with the multi-layered systems of the commercial products.

TABLE IV

Resistance to migration of plasticizers from wrapping film to surface of label as percent contrast signal (PCS)

| Product | PCS before contact with film | PCS after 72 hrs. contact with film |
|---|---|---|
| Scale label face stock of the invention | 80 | 67-74 |
| Label stock of U.S. Patent 4,500,354 | 65-75 | 59-66 |
| Ricoh LAV 115 label stock | 75-85 | 60-70 |
| Pitney Bowes facsimile grade thermal paper | 69-75 | low 30's |

The results in Table IV show, in the case of labels of the invention, initial high contrast between background and imaged characters and high retention of the contact with the wrapping film, thus establishing that the printing ink/coating compositions of the invention afford good protection against migration of plasticizer. By comparison the Ricoh products provided good initial contrast but this decreased somewhat after contact with the film. The Ricoh product results, although similar to those of products of the invention, required multiple protective coats.

**TABLE V**

Resistance to vinegar

| | Resistance |
|---|---|
| Scale label stock of present invention | fair, some image change |
| Ricoh 115 LAV stock | fair, spot-like disappearance of image |
| Ricoh HR[1] stock | fair, spot-like disappearance of image. White spots are observed on otherwise solid black bar. |

The test results in Table V indicate less image change in products of the invention due to contact with the vinegar than in the commercial products, and the products of the invention achieve the advantage through application of only a single coating.

Table VI below summarizes scannability and percent contrast signals on labels coated with the above-described composition of the invention and printed with bar codes on a Hobart VIS-VP printer. The printed labels were subjected to the various adverse conditions such as described in tests (a) through (e) above, but also including ultraviolet light and ethyl alcohol. As compared with the control sample (paper coated with the same composition but not subjected to the various influences), the scannability and percent contrast reflectance were excellent.

TABLE VI

| | % Scannability[1] | Bars | Reflectanct, % Background | PCS[2] |
|---|---|---|---|---|
| vegetable oil | 100 | 19 | 78 | 79 |
| ultraviolet | 100 | 16 | 87 | 81 |
| vinegar | 100 | 29 | 83 | 65 |
| distilled water | 100 | 26 | 87 | 70 |
| plasticized PVC | 100 | 16 | 84 | 80 |
| ethyl alcohol 5% | 100 | 35 | 89 | 60 |
| control label | 100 | 19 | 86 | 77 |

1 By Lasercheck.

2 As defined in test (d) above.

Examples 2-4

The following printing ink formulations were prepared essentially as described in Example 1 and tested for resistance to various environmental conditions, and for scannability and reflectance, also essentially as described in Example 1. The components are the same as in Example 1 except where noted. The results, as reported in Table VII, indicate somewhat less resistance to water than the formulation of Example 1 but otherwise good resistance to other influences and good optical clarity.

| Formulations | Example No. Parts by Wt. 2 | 3 | 4 |
|---|---|---|---|
| Phenol-amino complex | 1.2 | 1.2 | 1.2 |
| Behenic acid amide | 1.0 | 1.0 | 1.0 |
| Styrene-maleic anhydride copolymer, ammonia salt | 0.4 | 0.4 | 0.2 |
| Styrene-Butadiene latex[1] | -- | -- | 0.2 |
| Crystal Violet Lactone | 0.15 | -- | -- |
| 3-n-cyclohexyl-n-butyl-6-methyl-7-anilino fluoran | -- | 0.3 | 0.3 |
| Polyaziridine crosslinker (XAMA-2) | 0.4 | -- | -- |
| Polyaziridine crosslinker (XAMA-7)[2] | -- | -- | 0.4 |
| Aquatac 5090[3] | -- | 0.2 | -- |
| Clay (hexagonal) | -- | -- | 2.0 |
| Water | 5.0 | 5.0 | 8.0 |
| Optical Whitener | 0.2 | 0.2 | 0.2 |
| Alkaline buffer ($KHCO_3$) | 0.1 | -- | -- |

1 Polysar Company

2 Cordova Chemical Company

3 Gelling agent

## TABLE VII

Resistance to influences; Image stability after 24 hours

| Substance | Scannability, % Example No. | | | Reflectance (bars, %) Example No. | | | PCS Example No. | | |
|---|---|---|---|---|---|---|---|---|---|
| | 2 | 3 | 4 | 2 | 3 | 4 | 2 | 3 | 4 |
| vegetable oil | 100 | 100 | 100 | 25 | 19 | 28 | 70 | 77 | 65 |
| vinegar | 100 | 100 | 85 | 39 | 29 | 40 | 60 | 65 | 55 |
| plasticized PVC | 100 | -- | -- | 23 | -- | -- | 70 | -- | -- |
| ultraviolet (7 days) | 100 | -- | -- | 23 | -- | -- | 70 | -- | -- |
| water | 95 | -- | -- | 35 | -- | -- | 65 | -- | -- |

## CLAIMS

1. A thermally-developable printing and self-protecting coating composition comprising an aqueous dispersion of

   a. a chromatic material,

   b. a water-stable phenol-amine complex having limited water solubility, and

   c. an alkaline, water-soluble binder in ammonium or amine salt form,

characterized in that it contains a polyfunctional aziridinyl compound in an aziridinyl compound/binder meq/gram ratio of 3.26/3.62 to 7.14/3.62.

2. A composition according to claim 1, wherein the aziridinyl compound/binder meq/gram ratio is 3.4/3.62 to 3.75/3.62.

3. A composition according to claim 2, wherein the aziridinyl compounds/binder meq/gram ratio is 3.62/3.62.

4. A composition according to any of the preceding claims wherein the aziridinyl compound has the general formula:-

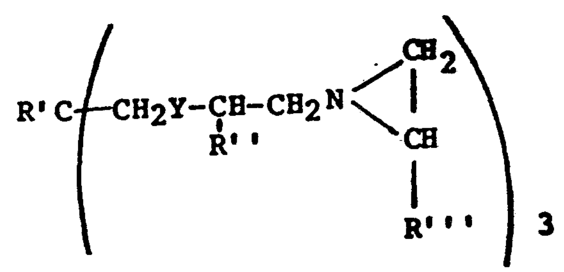

in which Y is $-O-\overset{O}{\overset{\|}{C}}-$ , R' is an alkyl or hydroxyalkyl radical containing 1-4 carbon atoms, and R'' and R''' independently are hydrogen atoms or methyl radicals.

5. A composition according to claim 4, wherein the aziridinyl compound is trimethylolpropane-tris-(B-(N-aziridinyl) proprionate).

6. A composition according to claim 4 wherein the aziridinyl compound is trimethylolpropane-tris-(B-(N-2-methylaziridinyl) propionate).

7. A composition according to claim 4, wherein aziridinyl compound is pentaerythritol-tris-(B-(N-aziridinyl) propionate).

8. A composition according to any of claims 1 to 5, wherein the binder is a styrene/maleic anhydride copolymer and the aziridinyl compound is trimethylolpropane-tris-(b-(N-aziridinyl) propionate).

9. Thermally-developable, environmentally protected print stock, comprising a paper or polymeric film substrate coated with a composition according to any of claims 1 to 8.

10. A process for producing a thermally-developable, environmentally protected print stock, which process comprises coating a paper or polymeric film substrate with a composition according to any of claims 1 to 8 and drying the thus coated substrate.

11. Thermally-developable, environmentally protected labeling material, comprising print stock coated with pressure-sensitive adhesive and having a release sheet on said adhesive, said print stock comprising a paper or polymeric film substrate coated with a composition according to any of claims 1 to 8.